# EUROPEAN PATENT APPLICATION

(11) **EP 3 757 710 A1**
(43) Date of publication of application: **30.12.2020**
(21) Application number: 18907457.8
(22) Date of filing: 13.09.2018
(51) Int. Cl.: G05D 1/02

(54) **AUTOMATIC VEHICLE DRIVING CONTROL METHOD AND AUTOMATIC DRIVING CONTROL APPARATUS**

(30) Priority: 24.02.2018 CN 201810157719
(71) Applicant: Beijing Tusen Weilai Technology Co., Ltd., Beijing 101300 (CN)
(72) Inventor: WU, Nan, Beijing 101300 (CN)
(74) Representative: Murgitroyd & Company
(86) International application number: PCT/CN2018/105467
(87) International publication number: WO 2019/161660

(57) **Abstract**

The present disclosure provides a method and a device for controlling an autonomous vehicle, capable of controlling the autonomous vehicle to automatically complete customs inspection of a container, without a truck driver for transporting the container for customs inspection, thereby reducing labor costs. The method includes: obtaining a customs inspection task for transporting a target container to customs for inspection; controlling an autonomous vehicle to transport the target container to a waiting area at an entrance to the customs; determining an inspection lane corresponding to the autonomous vehicle, and controlling the autonomous vehicle to move to the inspection lane; obtaining an inspection notification indicating that the customs have decided to inspect the target container, and controlling the autonomous vehicle to move to a target location in an inspection area specified in the inspection notification to wait for the container to be unloaded; and controlling the autonomous vehicle to leave the inspection area when determining that the container has been unloaded.

## Description

The present disclosure claims priority to Chinese Patent Application No. 201810157719.4, titled "AUTONOMOUS VEHICLE CONTROL METHOD AND AUTONOMOUS DRIVING CONTROL DEVICE", filed on February 24, 2018, the content of which is incorporated herein by reference in its entirety.

### TECHNICAL FIELD

The present disclosure relates to autonomous driving technology, and more particularly, to an autonomous vehicle control method and an autonomous driving control device.

### BACKGROUND

Currently, in some large ports, it is often required to transport containers in a port area to customs for inspection, and then transport the containers that have passed the inspection back to the port from the customs.

Typically, the port area assigns truck drivers to drive trucks to transport the containers that needs customs inspection to the customs, go through a related inspection process at the customs, and then transport the inspected containers back to the port area from the customs. However, since there are generally a large number of containers in the port area that need to be transported to the customs for inspection, and the inspection process at the customs is time-consuming, a large number of truck drivers are required to transport containers between the port area and the customs, resulting in a high labor cost.

### SUMMARY

In view of the above problem, the present disclosure provides a method and a device for controlling an autonomous vehicle, capable of controlling the autonomous vehicle to automatically complete customs inspection of a container, without a truck driver for transporting the container for customs inspection, thereby reducing labor costs.

In a first aspect, an autonomous vehicle control method is provided according to an embodiment of the present disclosure. The method includes: obtaining a customs inspection task for transporting a target container to customs for inspection; controlling an autonomous vehicle to transport the target container to a waiting area at an entrance to the customs; determining an inspection lane corresponding to the autonomous vehicle, and controlling the autonomous vehicle to move to the inspection lane; obtaining an inspection notification indicating that the customs have decided to inspect the target container, and controlling the autonomous vehicle to move to a target location in an inspection area specified in the inspection notification to wait for the container to be unloaded; and controlling the autonomous vehicle to leave the inspection area when determining that the container has been unloaded.

In a second aspect, an autonomous vehicle control method is provided according to an embodiment of the present disclosure. The method includes: obtaining a transportation task for transporting a target container from customs to a port area; controlling an autonomous vehicle to move to a waiting area at an entrance to the customs; determining an inspection lane corresponding to the autonomous vehicle, and controlling the autonomous vehicle to move to the inspection lane; obtaining a pick-up notification, and controlling the autonomous vehicle to move to a target location in the inspection area as specified in the pick-up notification to wait for the target container to be loaded; and controlling the autonomous vehicle to move from the inspection area to the port area when determining that the target container has been loaded.

In a third aspect, an autonomous driving control device is provided according to an embodiment of the present disclosure. The device includes: a first obtaining unit configured to obtain a customs inspection task for transporting a target container to customs for inspection; a first control unit configured to control an autonomous vehicle to transport the target container to a waiting area at an entrance to the customs; a first determining unit configured to determine an inspection lane corresponding to the autonomous vehicle, and trigger a second control unit; the second control unit configured to control the autonomous vehicle to move to the inspection lane; a second obtaining unit configured to obtain an inspection notification indicating that the customs have decided to inspect the target container, and trigger a third control unit; the third control unit configured to control the autonomous vehicle to move to a target location in an inspection area specified in the inspection notification to wait for the container to be unloaded; a second determining unit configured to trigger a fourth control unit when determining that the container has been unloaded; and the fourth control unit configured to control the autonomous vehicle to leave the inspection area.

In a fourth aspect, an autonomous driving control device is provided according to an embodiment of the present disclosure. The device includes: a third obtaining unit configured to obtain a transportation task for transporting a target container from customs to a port area, and trigger a fifth control unit; the fifth control unit configured to control an autonomous vehicle to move to a waiting area at an entrance to the customs; a third determining unit configured to determine an inspection lane corresponding to the autonomous vehicle, and trigger a sixth control unit; the sixth control unit configured to control the autonomous vehicle to move to the inspection lane; a fourth obtaining unit configured to obtain a pick-up notification, and trigger a seventh control unit; the seventh control unit configured to control the autonomous vehicle to move to a target location in the inspection area as specified in the pick-up notification to wait for the target container to be loaded; a fourth determining unit configured to determine that the target container has been loaded, and trigger an eighth control unit; and the eighth control unit configured to control the autonomous vehicle to move from the inspection area to the port area.

In a fifth aspect, an autonomous driving control device is provided according to an embodiment of the present disclosure. The device includes a processor and at least one memory storing at least one machine executable instruction. The processor is operative to execute the at least one machine executable instruction to: obtain a customs inspection task for transporting a target container to customs for inspection; control an autonomous vehicle to transport the target container to a waiting area at an entrance to the customs; determine an inspection lane corresponding to the autonomous vehicle, and control the autonomous vehicle to move to the inspection lane; obtain an inspection notification indicating that the customs have decided to inspect the target container, and control the autonomous vehicle to move to a target location in an inspection area specified in the inspection notification to wait for the container to be unloaded; and control the autonomous vehicle to leave the inspection area when determining that the container has been unloaded.

In a sixth aspect, an autonomous driving control device is provided according to an embodiment of the present disclosure. The device includes a processor and at least one memory storing at least one machine executable instruction. The processor is operative to execute the at least one machine executable instruction to: obtain a transportation task for transporting a target container from customs to a port area; control an autonomous vehicle to move to a waiting area at an entrance to the customs; determine an inspection lane corresponding to the autonomous vehicle, and control the autonomous vehicle to move to the inspection lane; obtain a pick-up notification, and control the autonomous vehicle to move to a target location in the inspection area as specified in the pick-up notification to wait for the target container to be loaded; and control the autonomous vehicle to move from the inspection area to the port area when determining that the target container has been loaded.

With the technical solutions according to the embodiments of the present disclosure, a customs inspection task is generated for each container (i.e., target container) to be inspected by the customs, and the customs inspection task is transmitted to an autonomous driving control device corresponding to an autonomous vehicle. Upon receiving the customs inspection task, the autonomous driving control device controls the autonomous vehicle to transport the target container to the customs, and cooperates with the customs to complete the corresponding customs inspection process. The whole process is automated, without human intervention. There is no need to provide each truck with a driver for the container transportation and customs inspection process, thereby reducing labor costs.

The other features and advantages of the present disclosure will be explained in the following description, and will become apparent partly from the description or be understood by implementing the present disclosure. The objects and other advantages of the present disclosure can be achieved and obtained from the structures specifically illustrated in the written description, claims and figures.

In the following, the solutions according to the present disclosure will be described in detail with reference to the figures and embodiments.

### BRIEF DESCRIPTION OF THE DRAWINGS

The figures are provided for facilitating further understanding of the present disclosure. The figures constitute a portion of the description and can be used in combination with the embodiments of the present disclosure to interpret, rather than limiting, the present disclosure. It is apparent to those skilled in the art that the figures described below only illustrate some embodiments of the present disclosure and other figures can be obtained from these figures without applying any inventive skills. In the figures:
Fig. 1 is a first flowchart illustrating an autonomous vehicle control method according to an embodiment of the present disclosure;
Fig. 2A is a schematic diagram showing communication among a customs system, an inspection system and an autonomous driving control device in Scenario A according to an embodiment of the present disclosure;
Fig. 2B is a schematic diagram showing a customs inspection area provided in a port area in Scenario B according to an embodiment of the present disclosure;
Fig. 2C is a schematic diagram showing electronic screens provided in a waiting area, an inspection lane, and an inspection area of customs in Scenario B according to an embodiment of the present disclosure;
Fig. 2D is a schematic diagram showing communication among customs, an inspection system and an autonomous driving control device in Scenario C according to an embodiment of the present disclosure;
Fig. 2E is a schematic diagram showing voice broadcasters provided in a waiting area, an inspection lane, and an inspection area of customs in Scenario D according to an embodiment of the present disclosure;
Fig. 3 is a second flowchart illustrating an autonomous vehicle control method according to an embodiment of the present disclosure;
Fig. 4 is a first schematic diagram showing a structural of an autonomous driving control device according to an embodiment of the present disclosure;
Fig. 5 is a second schematic diagram showing a structural of an autonomous driving control device according to an embodiment of the present disclosure;
Fig. 6 is a third schematic diagram showing a structural of an autonomous driving control device according to an embodiment of the present disclosure;
Fig. 7 is a fourth schematic diagram showing a structural of an autonomous driving control device according to an embodiment of the present disclosure; and
Fig. 8 is a fifth schematic diagram showing a structural of an autonomous driving control device according to an embodiment of the present disclosure.

### DETAILED DESCRIPTION OF THE EMBODIMENTS

In the following, the solutions according to the embodiments of the present disclosure will be described clearly and completely with reference to the figures, such that the solutions can be better understood by those skilled in the art. Obviously, the embodiments described below are only some, rather than all, of the embodiments of the present disclosure. All other embodiments that can be obtained by those skilled in the art based on the embodiments described in the present disclosure without any inventive efforts are to be encompassed by the scope of the present disclosure.

The autonomous vehicle control method according to the embodiment of the present disclosure can be performed on an autonomous driving control device, which can be provided on an autonomous vehicle.

### Embodiment 1

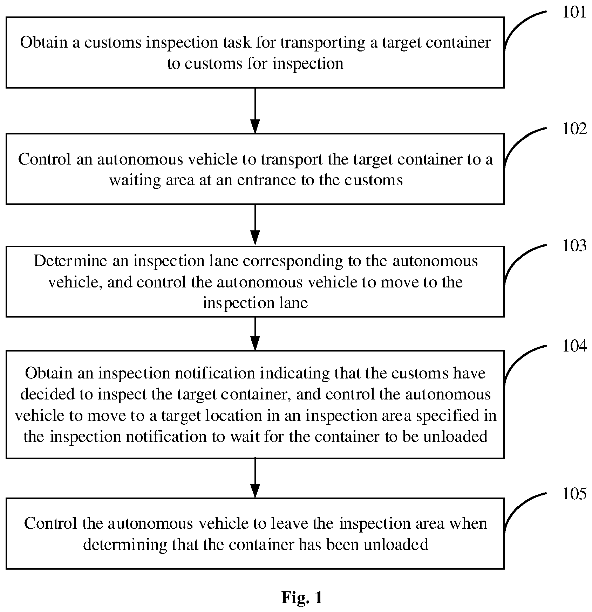

Referring to Fig. 1, which is a flowchart illustrating an autonomous vehicle control method according to an embodiment of the present disclosure, the method includes the following steps.

At step 101, a customs inspection task for transporting a target container to customs for inspection is obtained.

At step 102, an autonomous vehicle is controlled to transport the target container to a waiting area at an entrance to the customs.

At step 103, an inspection lane corresponding to the autonomous vehicle is determined, and the autonomous vehicle is controlled to move to the inspection lane.

At step 104, an inspection notification indicating that the customs have decided to inspect the target container is obtained, and the autonomous vehicle is controlled to move to a target location in an inspection area specified in the inspection notification to wait for the container to be unloaded.

At step 105, the autonomous vehicle is controlled to leave the inspection area when determining that the container has been unloaded.

In the embodiment of the present disclosure, the autonomous vehicle may be a container truck, a trailer, a crane, or the like.

Preferably, the above step 101 can be implemented differently in different application scenarios. In particular, the above step 101 can be, but not limited to be, implemented in any of the following schemes (Scheme A1 to Scheme A4).
Scheme A1: The customs inspection task can be received from an inspection system of a port area.
   In an embodiment of the present disclosure, the inspection system may be a management system in the port area that is dedicated to communicating with a customs system, scheduling autonomous vehicles to carry containers to be inspected (i.e., the target containers) to the customs for customs inspection, and scheduling autonomous vehicles to carry containers that have been inspected by the customs back to the port area. Alternatively, the inspection system can be a management system of the port area, such as a Terminal Operation System (TOS). In an embodiment of the present disclosure, the inspection system in the port area and the autonomous driving control device on the autonomous vehicle can communicate with each other using communication technologies such as WIFI, V2X, or the like. The present disclosure is not limited to any specific communication scheme between the system in the port area and the autonomous driving control device.
Scheme A2: The customs inspection task can be received from a customs system.
Scheme A3: A first image of an electronic screen can be captured using a vehicle-mounted camera, and content in the first image can be identified using a predetermined image identification algorithm to obtain the customs inspection task.
   In Scheme A3: The vehicle-mounted camera refers to a camera mounted on the autonomous vehicle.
Scheme A4: The customs inspection task broadcasted by a voice broadcaster can be identified using a predetermined voice model.

In Scheme A4, the autonomous driving control device of the autonomous vehicle can identify the content broadcasted by the voice broadcaster using its built-in voice model, and the autonomous driving control device can obtain the customs inspection task corresponding to the autonomous vehicle based on the content identified using the voice model.

The customs inspection task can include the following information: identity information of the autonomous vehicle, a container number, and information indicating whether or not it is to be inspected by the customs, e.g., "License plate number: ****; Container number: ****; To be inspected by customs".

Of course, if the autonomous vehicle is currently empty, the customs inspection task may also include a loading/unloading location where the target container is located. In particular, in the step 102, a driving route from a current location to the loading/unloading location of the target container can be determined, and the autonomous vehicle can be controlled to move to the loading/unloading location where the target container is located along the driving route to wait for the container to be loaded. When it is determined that the container has been loaded, a first driving route from the current location of the autonomous vehicle to the waiting area at the entrance to the customs can be determined, and the autonomous vehicle can be controlled to move to the waiting area at the entrance to the customs along the first driving route. If the container currently carried by the autonomous vehicle is the target container, in the above step 102, a first driving route from the current location of the autonomous vehicle to the waiting area at the entrance to the customs can be determined, and the autonomous vehicle can be controlled to move to the waiting area at the entrance to the customs along the first driving route.

Preferably, the driving route (the first driving route) from the current location to the loading/unloading location of the target container (the waiting area at the entrance to the customs) can be determined in any of the following schemes.

Scheme B1: The driving route (first driving route) from the current location of the autonomous vehicle to the loading/unloading location (the waiting area at the entrance to the customs) can be planned based on pre-stored electronic map data, and the autonomous vehicle can be controlled to move to the loading/unloading location (the waiting area at the entrance to the customs) along the driving route (the first driving route).

In Scheme B1, the electronic map data can be pre-stored in a register of the autonomous driving control device, and the driving route (first driving route) can be planned based on the electronic map data by a navigation module in the autonomous driving control device. Alternatively, the driving route (first driving route) can be planned using third-party map software.

Scheme B2: The driving route (first driving route) from the current location of the autonomous vehicle to the loading/unloading location (the waiting area at the entrance to the customs) can be received from the inspection system of the port area, and the autonomous vehicle can be controlled to move to the loading/unloading location (the waiting area at the entrance to the customs) along the driving route.

In Scheme B2, the autonomous vehicle can transmit the current location to the inspection system in real time or periodically, and the inspection system can plan the driving route (the first driving route) from the current location of the autonomous vehicle to the loading/unloading location (the waiting area at the entrance to the customs).

Preferably, the driving route from the port area to the customs may include a section with a toll station. In order to allow the autonomous vehicle to automatically complete the related toll payment operation at the toll station, in an embodiment of the present disclosure, in the above step 102, while controlling the autonomous vehicle to move to the waiting area at the entrance to the customs along the first driving route, when determining from perception information fed back from a vehicle-mounted sensor that there is a toll station ahead along a current road, it is determined whether the autonomous vehicle is an Electronic Toll Collection (ETC) system enabled vehicle. If so, the autonomous vehicle is controlled to pass through the toll station via an ETC lane, and the autonomous vehicle is controlled to continue to move along the first driving route; otherwise the autonomous vehicle is controlled to stop at the toll station and automatically pay a toll, and the autonomous vehicle is controlled to continue to move along the first driving route when determining from perception information fed back from the vehicle-mounted sensor that the autonomous vehicle has been cleared by the toll station.

In an embodiment of the present disclosure, the operation of determining from the perception information fed back from the vehicle-mounted sensor whether there is a toll station ahead along the current road may be performed in any of the following schemes.
Scheme b1: An image captured by a forward-facing camera installed on the autonomous vehicle can be received. Target detection can be performed on the image using a predetermined target detection algorithm to determine whether there is a toll station ahead along the road, or image recognition can be performed on the image using a predetermined image recognition algorithm to determine whether there is a toll station ahead along the road.
Scheme b2: Laser point cloud data returned from a forward-facing laser radar installed on the autonomous vehicle can be received, and it can be determined whether there is a toll station ahead along the road based on the laser point cloud data.
Scheme b3: It can be determined whether there is a toll station ahead along the road based on a combination of the current location of the autonomous vehicle as fed back from a vehicle-mounted positioning sensor and Points Of Interest (POIs) marked on the first driving route.

Preferably, in an example, a remote card reader can be provided at the entrance to the customs, and an electronic tag can be provided on the autonomous vehicle. The electronic tag may contain identity information of the autonomous vehicle and information on the container carried by the autonomous vehicle (including e.g., a container number, container declaration information, etc.). When the autonomous vehicle passes through the entrance to the customs, the remote card reader reads the electronic tag on the autonomous vehicle to obtain the identity information of the autonomous vehicle and the container information, and the customs system assigns an inspection lane to the autonomous vehicle.

In the step 103, the inspection lane corresponding to the autonomous vehicle can be determined in different schemes in different application scenarios. In particular, it can be implemented in any of the following schemes.

Scheme C1: The inspection lane corresponding to the autonomous vehicle can be received from an inspection system in a port area.

In Scheme C1, a customs system can transmit inspection lane information assigned to the autonomous vehicle (the inspection lane information includes the identity information of the autonomous vehicle and the inspection lane) to the inspection system, and the inspection system can transmit the inspection lane to the autonomous driving control device of the autonomous vehicle.

Scheme C2: The inspection lane corresponding to the autonomous vehicle can be received from a customs system.

In Scheme C2, the customs system can transmit the inspection lane assigned to the autonomous vehicle to the autonomous driving control device of the autonomous vehicle.

Scheme C3: A second image of an electronic screen located in the waiting area can be captured using a vehicle-mounted camera, and content in the second image can be identified using a predetermined image identification algorithm to obtain the inspection lane corresponding to the autonomous vehicle.

In Scheme C3, the inspection lane information displayed on the electronic screen in the waiting area may include the identity information of the autonomous vehicle and the inspection lane, e.g., "License plate number: ****; Inspection lane: ****". The autonomous driving control device of the autonomous vehicle can compare the license plate number in the content displayed on the electronic screen with the license plate number of its corresponding autonomous vehicle, and if they are the same, it can determine the inspection lane in the content displayed on the electronic screen as the inspection lane corresponding to the autonomous vehicle, or otherwise it can ignore the content displayed on the display screen.

Scheme C4: The inspection lane corresponding to the autonomous vehicle as broadcasted by a voice broadcaster can be identified using a predetermined voice model.

In Scheme C4, a voice broadcaster can be provided in the waiting area, and the voice broadcaster can be used to broadcast the inspection lane information corresponding to each autonomous vehicle. The inspection lane information may include: the identity information of the autonomous vehicle and the inspection lane, e.g., "License plate number: ****; Inspection lane: ****". The autonomous driving control device of the autonomous vehicle can identify the content broadcasted by the voice broadcaster using its built-in voice model, and obtain the inspection lane corresponding to the autonomous vehicle based on the content identified using the voice model. For example, the autonomous driving control device can compare the license plate number in the inspection lane information with the license plate number of its corresponding autonomous vehicle, and if they are the same, it can determine the inspection lane in the inspection lane information as the inspection lane for its corresponding autonomous vehicle, or otherwise it can ignore the inspection lane information.

Preferably, in an embodiment of the present disclosure, in the above step 104, the operation of obtaining the inspection notification indicating that the customs have decided to inspect the target container can be implemented differently in different scenarios. In particular, it can be implemented in any of the following schemes.

Scheme D1: The inspection notification can be received from an inspection system in a port area.

In Scheme D1, a customs system can transmit the inspection notification for the autonomous vehicle to the inspection system, and the inspection system can transmit the inspection notification to the autonomous driving control device of the autonomous vehicle.

Scheme D2: The inspection notification can be received from a customs system.

In Scheme D2, the customs system can transmit the inspection notification for the autonomous vehicle to the autonomous driving control device of the autonomous vehicle.

Scheme D3: A third image of an electronic screen located in the inspection lane can be captured using a vehicle-mounted camera, and content in the third image can be identified using a predetermined image identification algorithm to obtain the inspection notification.

In Scheme D3, an electronic screen corresponding to each inspection lane can be provided near the inspection lane, and the electronic screen can be used to display the inspection notification corresponding to the autonomous vehicle currently being inspected in the inspection lane. The inspection notification may include the following information: identity information of the autonomous vehicle, information indicating whether or not it is to be inspected by the customs, an inspection area, a target location in the inspection area (i.e., parking space number), e.g., "License plate number: ****; To be inspected by customs; Inspection area: *****; Parking space number: ****".

Scheme D4: The inspection notification broadcasted by a voice broadcaster can be identified using a predetermined voice model.

In Scheme D4, a voice broadcaster corresponding to each inspection lane can be provided near each inspection lane, and the voice broadcaster can be used to broadcast the inspection notification corresponding to the autonomous vehicle currently being inspected in the inspection lane. The inspection notification may include the following information: identity information of the autonomous vehicle, information indicating whether or not it is to be inspected by the customs, an inspection area, a target location in the inspection area (i.e., parking space number), e.g., "License plate number: ****; To be inspected by customs; Inspection area: *****; Parking space number: ****". The autonomous driving control device of the autonomous vehicle can identify the content broadcasted by the voice broadcaster using its built-in voice model, and obtain the inspection notification corresponding to the autonomous vehicle based on the content identified using the voice model. For example, the autonomous driving control device can compare the license plate number in the inspection lane information with the license plate number of its corresponding autonomous vehicle, and if they are the same, it can determine the inspection lane in the inspection lane information as the inspection lane for its corresponding autonomous vehicle, or otherwise it can ignore the inspection lane information.

Preferably, in an embodiment of the present disclosure, in the above step 104, a third driving route from the inspection lane to the target location can be determined in any of the following schemes.

Scheme E1: The third driving route from the inspection lane to the target location can be planned based on pre-stored electronic map data.

In Scheme E1, the electronic map data can be pre-stored in a register of the autonomous driving control device, and the third driving route can be planned based on the electronic map data by a navigation module in the autonomous driving control device. Alternatively, the third driving route can be planned using third-party map software.

Scheme E2: The third driving route from the inspection lane to the target location can be received from the inspection system of the port area.

In Scheme E2, the autonomous vehicle can transmit the current location to the inspection system in real time or periodically, such that the inspection system can plan the third driving route.

Preferably, some inspection lanes may be provided with rails, and vehicles are cleared when the rails are lifted. Therefore, in order to allow the autonomous vehicles to pass through the inspection lane, in an embodiment of the present disclosure, in the above step 104, before controlling the autonomous vehicle to move to the target location along the third driving route, it can be determined from perception information fed back from a vehicle-mounted sensor whether the autonomous vehicle has been cleared by the inspection lane, and if so, the step of controlling the autonomous vehicle to move to the target location along the third driving route can be performed, or otherwise the autonomous vehicle can be controlled to wait where it is.

Preferably, in an embodiment of the present disclosure, in the above step 105, the operation of determining that the container has been unloaded can be implemented differently in different application scenarios. In particular, it can be implemented in any of the following schemes.
Scheme F1: It can be determined that the container has been unloaded when determining that a gravity value fed back from a gravity sensor is smaller than or equal to a predetermined gravity threshold value and remains unchanged for a predetermined time length. The gravity sensor can be installed on a platform of the autonomous vehicle.
Scheme F2: It can be determined that the container has been unloaded when receiving a container unloaded indication from an inspection system in a port area.
   In Scheme F2, when a loading/unloading control device determines that it has controlled a loading/unloading device (the loading/unloading device can be e.g., a reach stacker, a tire crane, a rail crane, a tower crane, an overhead cranes or a mobile crane, etc.) to complete unloading of the target container, it can transmit a container unloaded indication to the inspection system. The container unloaded indication may include the following information: identity information of the autonomous vehicle, a container number, and information indicating that the container has been unloaded. When the inspection system receives the container unloaded indication, it can transmit the container unloaded indication to the autonomous driving control device of the corresponding autonomous vehicle. The loading/unloading control device may be installed on the loading/unloading device or near the loading/unloading device. The present disclosure is not limited to this.
Scheme F3: It can be determined that the container has been unloaded when receiving a container unloaded indication from a customs system.
   In Scheme F3, when a loading/unloading control device has controlled a loading/unloading device to complete unloading of the target container, it can transmit a container unloaded indication to the customs system. The container unloaded indication may include the following information: identity information of the autonomous vehicle, a container number, and information indicating that the container has been unloaded. When the customs system receives the container unloaded indication, it can transmit the container unloaded indication to the autonomous driving control device of the corresponding autonomous vehicle.
Scheme F4: It can be determined that the container has been unloaded when receiving a container unloaded indication from a loading/unloading control device in the inspection area.
   In Scheme F4, a loading/unloading control device can exchange information with the autonomous driving control device. After the autonomous driving control device arrives at the target location, it can transmit, to the loading/unloading control device, standby information containing a parking space number, identity information of the autonomous driving device, and a container number. After receiving the standby information, the loading/unloading control device can automatically unload the target container from the autonomous vehicle. When the container has been unloaded, the loading/unloading control device can transmit a container unloaded indication to the autonomous driving control device. In an embodiment of the present disclosure, the loading/unloading control device can communicate with the autonomous driving control device of the autonomous vehicle using communication technologies such as WIFI or V2X. The present disclosure is not limited to any specific communication technology.
Scheme F5: A fourth image of an electronic screen in the inspection area can be captured using a vehicle-mounted camera, and content in the fourth image can be identified using a predetermined image identification algorithm to obtain a notification that the container has been unloaded.
   In Scheme F5, the notification that the container has been unloaded can be displayed on an electronic screen in the inspection area. The notification that the container has been unloaded may include: identity information of the autonomous vehicle, a container number, and information indicating that the container has been unloaded, e.g., "License plate number: ****; Container number: ****; Container unloaded".
Scheme F6: A notification that the container has been unloaded as broadcasted by a voice broadcaster can be identified using a predetermined voice model.

In Scheme F6, a voice broadcaster can be provided in the inspection area, and the voice broadcaster can be configured to broadcast a notification that the container has been unloaded from the autonomous vehicle in the inspection area. The notification that the container has been unloaded may include: identity information of the autonomous vehicle, a container number, and information indicating that the container has been unloaded, such as "License plate number: ****; Container number: ****; Container unloaded". The autonomous driving control device of the autonomous vehicle can identify the content broadcasted by the voice broadcaster using its built-in voice model, and obtain a notification that the container corresponding to the autonomous vehicle has been unloaded based on the content identified using the voice model. For example, the autonomous driving control device can compare the license plate number in the notification that the container has been unloaded with the license plate number of its corresponding autonomous vehicle, and if they are the same, it can determine the notification that the container has been unloaded as the notification that the container has been unloaded for its corresponding autonomous vehicle, or otherwise ignore the notification that the container has been unloaded.

The technical solutions of the present disclosure can be applied to the following application scenarios.

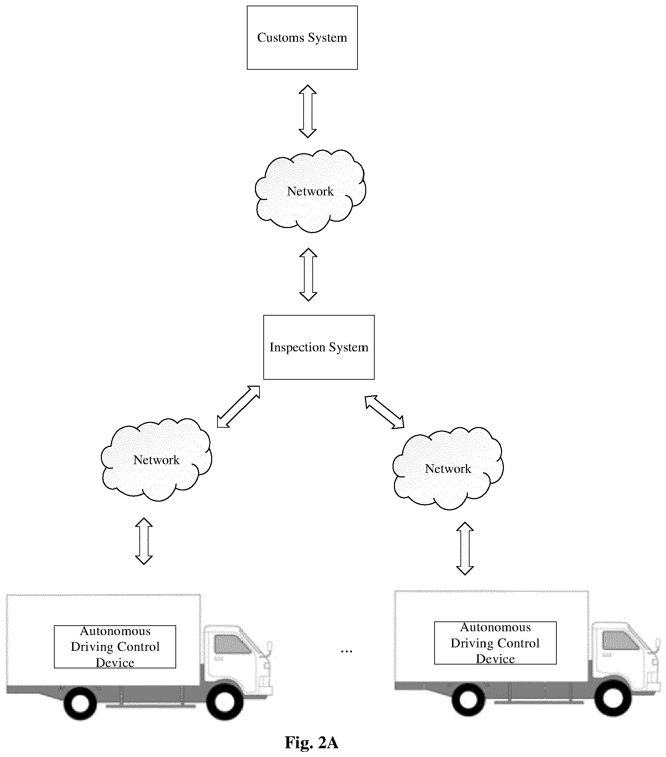

Scenario A: The customs system can exchange information with the inspection system in the port area, but the customs system cannot exchange information with the autonomous driving control device. The customs system can transmit information such as customs inspection tasks, inspection lanes, inspection notifications, and container unloaded indications to the inspection system. The inspection system can transmit the received custom inspection tasks, inspection lanes, inspection notifications, and container unloaded indications to the respective autonomous driving control devices of the autonomous vehicles, as shown in Fig. 2A. In Scenario A, the customs inspection task can be obtained using Scheme A1 in the step 101; the inspection lane can be determined using Scheme C1 in the step 103; the inspection notification can be obtained using Scheme D1 in the step 104; and the determination that the container has been unloaded can be made using Scheme F2 in the step 105.

In Scenario A, the inspection system of the port area can synchronize information related to all containers in the port area or containers carried by ships to enter the port (including e.g., container numbers, information on goods carried in the containers, shipper information of the containers, recipient information of the containers, etc.) to the customs system in advance. The customs system can transmit container numbers of the containers (i.e., target containers) to be inspected by the customs to the inspection system of the port area. The inspection system can generate a customs inspection task for each target container, and match an autonomous vehicle to complete the customs inspection task, and transmit the customs inspection task to an autonomous driving control device on the matched autonomous vehicle. Alternatively, a port area management officer can declare all containers in the port area or containers carried by ships to enter the port at the customs in advance, or the management officer can declare all containers in the port area or containers carried by ships to enter the port at the customs system using the inspection system. The customs system can transmit container numbers of the target containers to the inspection system in the port area. The inspection system can generate a customs inspection task for each target container, match the autonomous vehicle to complete the customs inspection task, and transmit the customs inspection task to the autonomous driving control device on the matched autonomous vehicle.

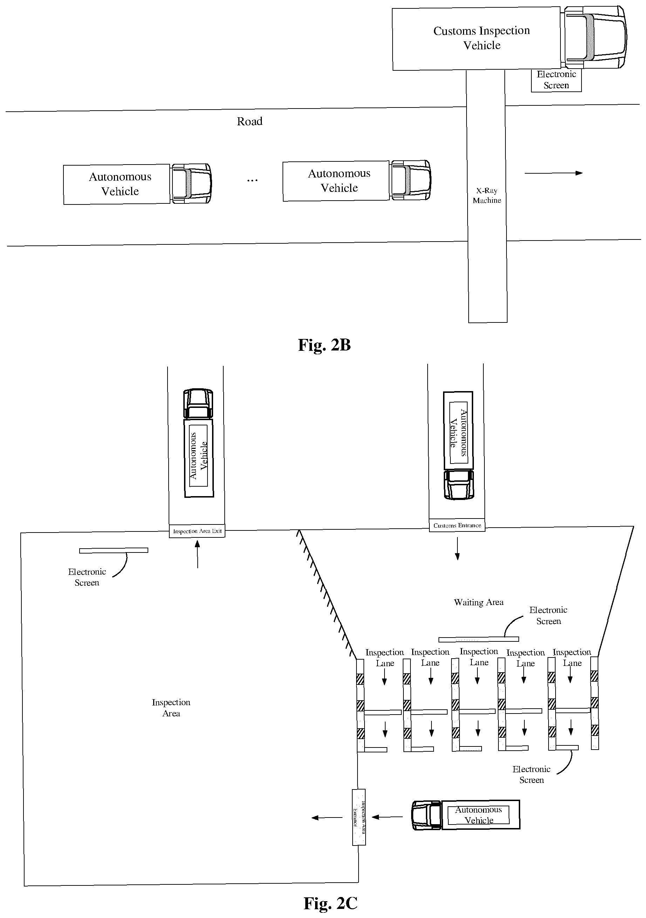

Scenario B: The customs system cannot exchange information with the inspection system, and the customs system cannot exchange information with the autonomous driving control device. There is a customs inspection vehicle in the port area, and the customs inspection vehicle is equipped with an inspection gate having an X-ray machine, as shown in Fig. 2B. An electronic screen or a voice broadcaster is provided near the customs inspection vehicle, an electronic screen is provided in the customs waiting area, an electronic screen is provided in the inspection lane, and an electronic screen is provided in the inspection area, as shown in Fig. 2C. The container carried by the autonomous vehicle can be first screened by the customs inspection vehicle. When it is determined that the container needs to be inspected by the customs, the autonomous vehicle is required to transport the container to the customs for customs inspection. The autonomous vehicle carrying the container passes through the inspection gate of the customs inspection vehicle, and the X-ray machine of the inspection gate performs CT on the container on the autonomous vehicle, and then the customs officer determines based on the CT image whether the container on the autonomous vehicle is to be inspected by the customs. If the customs inspection is required, the customs officer will display a customs inspection task corresponding to the autonomous vehicle on the electronic screen via the customs inspection system. The autonomous driving control device can capture the image on the electronic screen in the customs inspection vehicle using a vehicle-mounted camera, identify content in the image using a predetermined image identification algorithm to obtain the customs inspection task. Alternatively, if the customs inspection is required, a customs inspection task corresponding to the autonomous vehicle can be broadcasted by a voice broadcaster, and the autonomous driving control device can identify the customs inspection task broadcasted by the voice broadcaster using a voice model.

In Scenario B, the inspection lane can be determined using Scheme C3 in the step 103; the inspection notification can be obtained using Scheme D3 in the step 104; and the determination that the container has been unloaded can be made using Scheme F5 in the step 105.

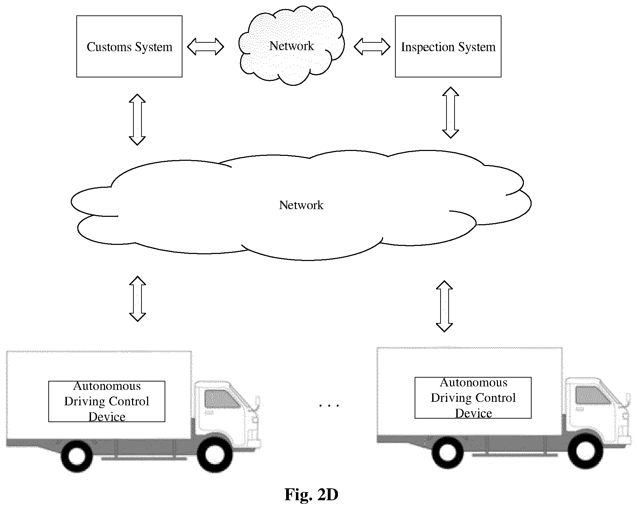

Scenario C: The customs system can exchange information with the inspection system, and the customs system can exchange information with the autonomous driving control device. The customs system can transmit customs inspection tasks to the inspection system, and the customs system can transmit information on inspection lanes inspection notifications, and container unloaded indications to respective autonomous driving control devices. The inspection system can transmit the received customs inspection tasks to the respective autonomous driving control devices of the autonomous vehicles, as shown in Fig. 2D.

In Scenario C, the customs inspection task can be obtained using Scheme A1 in the step 101; the inspection lane can be determined using Scheme C2 in the step 103; the inspection notification can be obtained using Scheme D2 in the step 104; and the determination that the container has been unloaded can be made using Scheme F3 in the step 105.

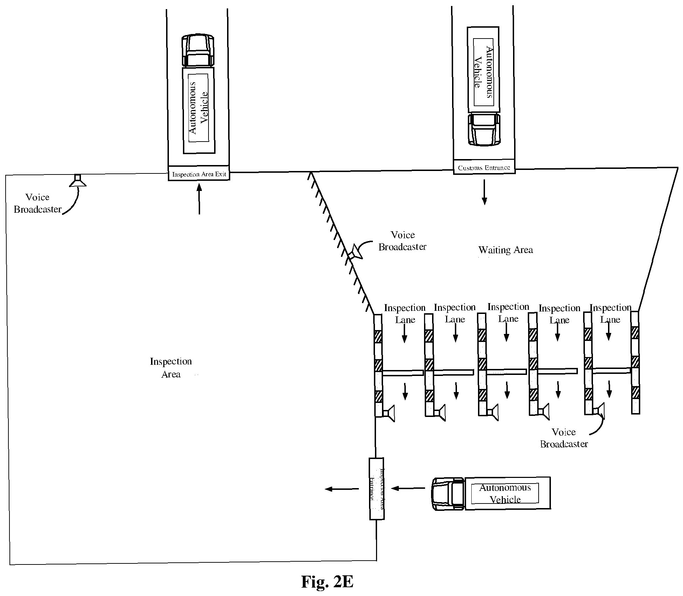

Scenario D: The customs system can exchange information with the inspection system in the port area. The customs system cannot exchange information with the autonomous driving control device. A voice broadcaster is provided in the customs waiting area, a voice broadcaster is provided in the inspection lane, and a voice broadcaster is provided in the inspection area. The customs system can transmit customs inspection tasks to the inspection system. The voice broadcasters can broadcast inspection lanes, inspection notifications, and container unloaded indications for respective autonomous vehicles, as shown in Fig. 2E. In Scenario D, in the step 101, the customs inspection task can be obtained using Scheme A1. Alternatively, a voice broadcaster can be provided in the port area, and the inspection system can broadcast the received customs inspection tasks using the voice broadcaster in the port area. That is, the customs inspection task can be obtained using Scheme A4 in the step 101. The inspection lane can be determined using Scheme C4 in the step 103; the inspection notification can be obtained using Scheme D4 in the step 104; and the determination that the container has been unloaded can be made using Scheme F6 in the step 105.

The above Scenarios A ∼ D are only examples of application scenarios of the technical solutions of the present disclosure, and it does not mean that the technical solutions of the present disclosure is only applicable to these four application scenarios. Those skilled in the art can also apply the above technical solutions to other application scenarios, and the specific implementation of each step can be selected differently depending on specific application scenarios.

### Embodiment 2

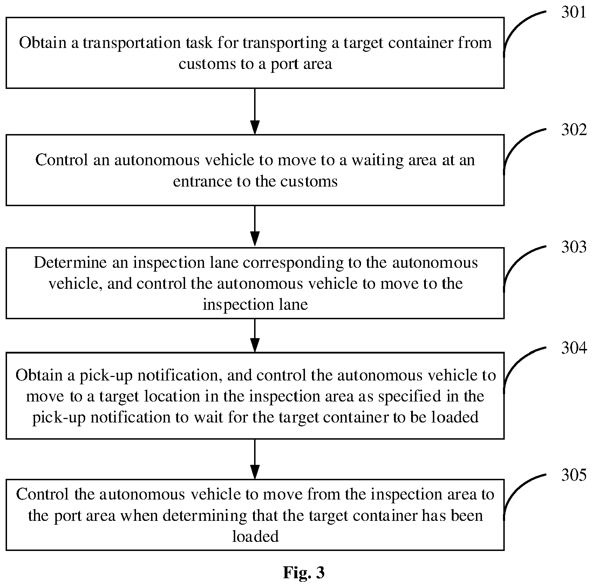

Embodiment 2 of the present disclosure provides an autonomous vehicle control method. The process flow of the method is shown in Fig. 3 and includes the following steps.

At step 301, a transportation task for transporting a target container from customs to a port area is obtained.

At step 302, an autonomous vehicle is controlled to move to a waiting area at an entrance to the customs.

At step 303, an inspection lane corresponding to the autonomous vehicle is determined, and the autonomous vehicle is controlled to move to the inspection lane.

At step 304, a pick-up notification is obtained, and the autonomous vehicle is controlled to move to a target location in the inspection area as specified in the pick-up notification to wait for the target container to be loaded.

At step 305, the autonomous vehicle is controlled to move from the inspection area to the port area when determining that the target container has been loaded.

The step 301 can be implemented differently in different application scenarios. In particular, the step 301 can be implemented in any of the following schemes.

Scheme G1: The transportation task can be received from an inspection system in the port area.

In Scheme G1, a customs system can transmit an inspection result for the container to an inspection system. The inspection result may include the following information: a number of the target container, a target location of the inspection area in which the target container is located, and an inspection result (e.g., inspection passed, seized, etc.). When the inspection system receives the inspection result, if the inspection result indicates that the inspection is passed, an autonomous vehicle is selected, and a transportation task to transport the target container from the customs to the port area is transmitted to the autonomous driving control device of the selected autonomous vehicle.

Scheme G2: The transportation task can be received from a customs system.

In Scheme G2, a customs system can transmit the transportation task to the autonomous driving control device of the autonomous vehicle. Scheme G2 is generally applicable to the following scenario. When the autonomous vehicle carries a container to the customs for customs inspection, the customs system can record a correspondence between identity information of the autonomous vehicle and a container number. When the inspection of the container is completed, the customs system determines the autonomous vehicle corresponding to the container and transmits the transportation task to the autonomous driving control device corresponding to the autonomous vehicle.

In an embodiment of the present disclosure, for the specific implementation of the step 302, reference can be made to the step 102 in the above Embodiment 1, and description thereof will be omitted here.

In an embodiment of the present disclosure, for the specific implementation of the step 303, reference can be made to the step 103 in the above Embodiment 1, and description thereof will be omitted here.

In an embodiment of the present disclosure, the step 304 can be implemented differently in different application scenarios. In particular, the step 304 can be implemented in any of the following schemes.

Scheme H1: The pick-up notification can be received from an inspection system in the port area.

In Scheme H1, a customs system can transmit the pick-up notification corresponding to the autonomous vehicle to an inspection system, and the inspection system can transmit the pick-up notification to the autonomous driving control device of the autonomous vehicle.

Scheme H2: The pick-up notification can be received from a customs system.

In Scheme H2, a customs system can transmit the pick-up notification corresponding to the autonomous vehicle to the autonomous driving control device of the autonomous vehicle.

Scheme H3: An image of an electronic screen located in the inspection lane can be captured using a vehicle-mounted camera, and content in the image can be identified using a predetermined image identification algorithm to obtain the pick-up notification.

In Scheme H3, the pick-up notification can be displayed on an electronic screen in the inspection lane.

Scheme H4: The pick-up notification broadcasted by a voice broadcaster can be identified using a predetermined voice model.

The pick-up notification may include the following information: identity information of the autonomous vehicle, a number of the target container, and a target location of the inspection area in which the target container is located, e.g., "License plate number: ****; Target container number: ****; Inspection area: ****; Parking space number: *****".

In Scheme H4, a voice broadcaster can be provided in each inspection lane, and the voice broadcaster can be configured to broadcast a pick-up notification corresponding to the autonomous vehicle currently being inspected in the inspection lane. The autonomous driving control device of the autonomous vehicle can identify the content broadcasted by the voice broadcaster using its built-in voice model, and obtain the pick-up notification corresponding to the autonomous vehicle based on the content identified using the voice model. For example, the autonomous driving control device can compare the license plate number in the pick-up notification with the license plate number of its corresponding autonomous vehicle, and if they are the same, it can determine the pick-up notification as the inspection lane for its corresponding autonomous vehicle, or otherwise it can ignore the pick-up notification.

Preferably, in the above step 305, the operation of determining that the container has been loaded can be implemented differently in different application scenarios. In particular, it can be implemented in any of the following schemes.

Scheme I1: It can be determined that the container has been loaded when determining that a gravity value fed back from a gravity sensor is larger than a predetermined gravity threshold value and remains unchanged for a predetermined time length. The gravity sensor can be installed on a platform of the autonomous vehicle.

Scheme 12: It can be determined that the container has been loaded when receiving a container loaded indication from an inspection system in a port area.

In Scheme 12, when a loading/unloading control device in the inspection area has controlled a loading/unloading device (the loading/unloading device can be e.g., a tire crane, an overhead crane, a reach stacker, a tower crane, a mobile crane, etc.) to complete loading of the target container, it can transmit a container loaded indication to the inspection system. The inspection system can transmit the container loaded indication to the autonomous driving control device of the corresponding autonomous vehicle based on the received container loaded indication. Alternatively, when a loading/unloading control device in the inspection area has controlled a loading/unloading device to complete loading of the target container, it can transmit a container loaded indication to a customs system. The customs system can transmit the container loaded indication to the inspection system. The inspection system can then transmit the received container loaded indication to the autonomous driving control device of the corresponding autonomous vehicle. The container loaded indication can include the following information: identity information of the autonomous vehicle, a container number, and information indicating whether or not the container has been loaded, e.g., "License plate number: ****; Container number: ****; Container loaded".

Scheme 13: It can be determined that the container has been loaded when receiving a container loaded indication from a customs system.

In Scheme 13, when a loading/unloading control device in the inspection area has controlled a loading/unloading device to complete loading of the target container, it can transmit a container loaded indication to a customs system, and the customs system can transmit the received container loaded indication to the autonomous driving control device of the autonomous vehicle.

Scheme 14: It can be determined that the container has been loaded when receiving a container loaded indication from a loading/unloading control device in the inspection area.

In Scheme 14, when a loading/unloading control device in the inspection area has controlled a loading/unloading device to complete loading of the target container, it can transmit a container loaded indication to the autonomous driving control device of the corresponding autonomous vehicle.

Scheme 15: An image of an electronic screen in the inspection area can be captured using a vehicle-mounted camera, and content in the image can be identified using a predetermined image identification algorithm to obtain a notification that the container has been loaded.

In Scheme 15, the notification that the container has been loaded can be displayed on an electronic screen in the inspection area. The notification that the container has been loaded may include: identity information of the autonomous vehicle, a container number, and information indicating that the container has been loaded, e.g., "License plate number: ****; Container number: ****; Container loaded".

Scheme 16: A notification that the container has been loaded as broadcasted by a voice broadcaster can be identified using a predetermined voice model.

In Scheme 16, a voice broadcaster can be provided in the inspection area, and the voice broadcaster can be configured to broadcast a notification that the container has been loaded onto the autonomous vehicle in the inspection area and an inspection notification corresponding to the autonomous vehicle currently being inspected in the inspection lane. The notification that the container has been loaded may include: identity information of the autonomous vehicle, a container number, and information indicating that the container has been loaded, e.g., "License plate number: ****; Container number: ****; Container loaded". The autonomous driving control device of the autonomous vehicle can identify the content broadcasted by the voice broadcaster using its built-in voice model, and obtain a notification that the container corresponding to the autonomous vehicle has been loaded based on the content identified using the voice model. For example, the autonomous driving control device can compare the license plate number in the notification that the container has been loaded with the license plate number of its corresponding autonomous vehicle, and if they are the same, it can determine the notification that the container has been loaded as the notification that the container has been loaded for its corresponding autonomous vehicle, or otherwise ignore the notification that the container has been loaded.

In the step 305, the operation of controlling the autonomous vehicle to move from the inspection area to the port area may include: determining a fifth driving route from the target location of the target container to an entrance to the port area, and controlling the autonomous vehicle to move to the entrance to the port area along the fifth driving route.

Preferably, the fifth driving route may include a section with a toll station. In order to allow the autonomous vehicle to automatically complete the related toll payment operation at the toll station, in an embodiment of the present disclosure, in the above step 305, while controlling the autonomous vehicle to move to the entrance to the customs along the fifth driving route, when determining from perception information fed back from a vehicle-mounted sensor that there is a toll station ahead along a current road, it is determined whether the autonomous vehicle is an Electronic Toll Collection (ETC) system enabled vehicle. If so, the autonomous vehicle is controlled to pass through the toll station via an ETC lane, and the autonomous vehicle is controlled to continue to move along the fifth driving route; otherwise the autonomous vehicle is controlled to stop at the toll station and automatically pay a toll, and the autonomous vehicle is controlled to continue to move along the fifth driving route when determining from perception information fed back from the vehicle-mounted sensor that the autonomous vehicle has been cleared by the toll station.

### Embodiment 3

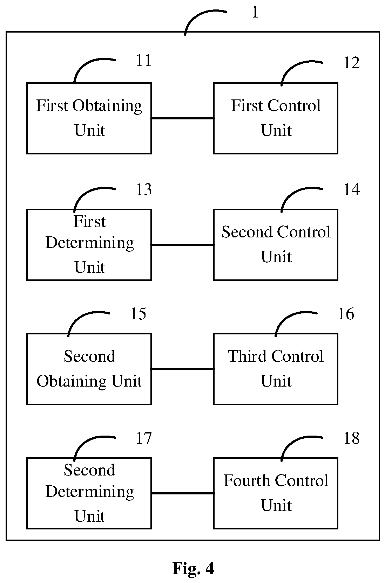

Based on the same concept as the autonomous driving control method according to the above Embodiment 1, Embodiment 3 of the present disclosure provides an autonomous driving control device. The autonomous driving control device 1 can have a structure shown in Fig. 4 and includes the following units.

A first obtaining unit 11 is configured to obtain a customs inspection task for transporting a target container to customs for inspection.

A first control unit 12 is configured to control an autonomous vehicle to transport the target container to a waiting area at an entrance to the customs.

A first determining unit 13 is configured to determine an inspection lane corresponding to the autonomous vehicle, and trigger a second control unit 14.

The second control unit 14 is configured to control the autonomous vehicle to move to the inspection lane.

A second obtaining unit 15 is configured to obtain an inspection notification indicating that the customs have decided to inspect the target container, and trigger a third control unit 16.

The third control unit 16 is configured to control the autonomous vehicle to move to a target location in an inspection area specified in the inspection notification to wait for the container to be unloaded.

A second determining unit 17 is configured to trigger a fourth control unit 18 when determining that the container has been unloaded.

The fourth control unit 18 is configured to control the autonomous vehicle to leave the inspection area.

In Embodiment 3 of the present disclosure, the autonomous driving control device 1 may be provided on a Digital Signal Processor (DSP), a Field-Programmable Gate Array (FPGA) controller, an industrial computer, a vehicle computer, an Electronic Control Unit (ECU), or a Vehicle Control Unit (VCU) mounted on the vehicle. The first obtaining unit 11, the first control unit 12, the second control unit 14, the first determining unit 13, the second obtaining unit 15, the third control unit 16, the second determining unit 17, and the fourth control unit 18 can be implemented with a processor (such as CPU) of the DSP, FPGA, industrial computer, vehicle computer, EUC or VCU.

Preferably, in an embodiment of the present disclosure, the first obtaining unit 11 can be, but not limited to be, configured to perform any of the following:
Scheme J1: Receive the customs inspection task from an inspection system of a port area through a communication interface of autonomous driving device;
Scheme J2: Receive the customs inspection task from a customs system through a communication interface of autonomous driving device;
Scheme J3: Capture a first image of an electronic screen using a vehicle-mounted camera, and identify content in the first image using a predetermined image identification algorithm to obtain the customs inspection task; and
Scheme J4: Identifying the customs inspection task broadcasted by a voice broadcaster using a predetermined voice model.

For details of the above Schemes J1 ∼ J4, reference can be made to Schemes A1 ∼ A4 in Embodiment 1, and description thereof will be omitted here.

Of course, if the autonomous vehicle is currently empty, the customs inspection task may also include a loading/unloading location where the target container is located. In particular, the first control unit 12 can be configured to: determine a driving route from a current location to the loading/unloading location of the target container, and control the autonomous vehicle to move to the loading/unloading location where the target container is located along the driving route to wait for the container to be loaded; determine a first driving route from the current location of the autonomous vehicle to the waiting area at the entrance to the customs when determining that the container has been loaded, and control the autonomous vehicle to move to the waiting area at the entrance to the customs along the first driving route. If the container currently carried by the autonomous vehicle is the target container, the above first control unit 12 can be configured to determine a first driving route from the current location of the autonomous vehicle to the waiting area at the entrance to the customs, and control the autonomous vehicle to move to the waiting area at the entrance to the customs along the first driving route.

The first control unit 12 can determine the first driving route from the current location of the autonomous vehicle to the waiting area at the entrance to the customs, and determine the driving route from the current location to the loading/unloading location where the target container is located. For further details, reference can be made to the above Scheme B1 ∼ B2 in the above Embodiment 1, and description thereof will be omitted here.

Preferably, the first determining unit 13 can be configured to perform any of the following:
Scheme K1: Receive the inspection lane corresponding to the autonomous vehicle from an inspection system in a port area through a communication interface of autonomous driving device;
Scheme K2: Receive the inspection lane corresponding to the autonomous vehicle from a customs system through a communication interface of autonomous driving device;
Scheme K3: Capture a second image of an electronic screen located in the waiting area using a vehicle-mounted camera, and identify content in the second image using a predetermined image identification algorithm to obtain the inspection lane corresponding to the autonomous vehicle; or
Scheme K4: Identify the inspection lane corresponding to the autonomous vehicle as broadcasted by a voice broadcaster using a predetermined voice model.

For details of the above Schemes K1 ∼ K4, reference can be made to Schemes C1 ∼ C4 in Embodiment 1, and description thereof will be omitted here.

Preferably, the second obtaining unit 15 can be configured to perform any of the following:
Scheme L1: Receive the inspection notification from an inspection system in a port area through a communication interface of autonomous driving device;
Scheme L2: Receive the inspection notification from a customs system through a communication interface of autonomous driving device;
Scheme L3: Capture a third image of an electronic screen located in the inspection lane using a vehicle-mounted camera, and identify content in the third image using a predetermined image identification algorithm to obtain the inspection notification; or
Scheme L4: Identify the inspection notification broadcasted by a voice broadcaster using a predetermined voice model.

For details of the above Schemes L1 ∼ L4, reference can be made to Schemes D1 ∼ D4 in Embodiment 1, and description thereof will be omitted here.

Preferably, the third control unit 16 can be configured to determine a third driving route from the inspection lane to the target location, and control the autonomous vehicle to move to the target location along the third driving route.

Preferably, the second determining unit 17 can be configured to perform any of the following:
Scheme M1: Determine that the container has been unloaded when determining that a gravity value fed back from a gravity sensor is smaller than or equal to a predetermined gravity threshold value and remains unchanged for a predetermined time length, the gravity sensor being installed on a platform of the autonomous vehicle;
Scheme M2: Determine that the container has been unloaded when receiving a container unloaded indication from an inspection system in a port area;
Scheme M3: Determine that the container has been unloaded when receiving a container unloaded indication from a customs system;
Scheme M4: Determine that the container has been unloaded when receiving a container unloaded indication from a loading/unloading control device in the inspection area;
Scheme M5: Capture a fourth image of an electronic screen in the inspection area using a vehicle-mounted camera, and identify content in the fourth image using a predetermined image identification algorithm to obtain a notification that the container has been unloaded; or
Scheme M6: Identify a notification that the container has been unloaded as broadcasted by a voice broadcaster using a predetermined voice model.

For details of the above Schemes M1 ∼ M6, reference can be made to Schemes F1 ∼ F6 in Embodiment 1, and description thereof will be omitted here.

### Embodiment 4

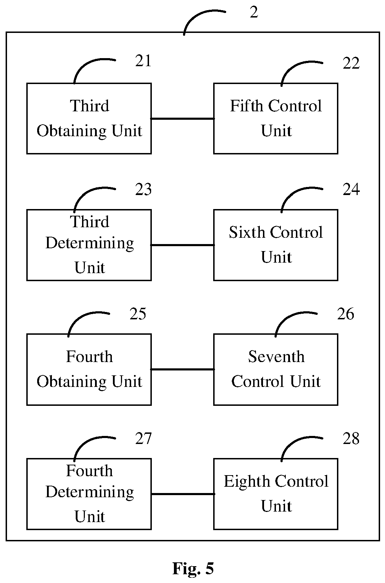

Based on the same concept as the autonomous driving control method according to Embodiment 2, in Embodiment 4 of the present disclosure, an autonomous driving control device is provided. The autonomous driving control device 2 can have a structure shown in Fig. 5 and includes the following units.

A third obtaining unit 21 is configured to obtain a transportation task for transporting a target container from customs to a port area, and trigger a fifth control unit 22.

The fifth control unit 22 is configured to control an autonomous vehicle to move to a waiting area at an entrance to the customs.

A third determining unit 23 is configured to determine an inspection lane corresponding to the autonomous vehicle, and trigger a sixth control unit 24.

The sixth control unit 24 is configured to control the autonomous vehicle to move to the inspection lane.

A fourth obtaining unit 25 is configured to obtain a pick-up notification, and trigger a seventh control unit 26.

The seventh control unit 26 is configured to control the autonomous vehicle to move to a target location in the inspection area as specified in the pick-up notification to wait for the target container to be loaded.

A fourth determining unit 27 is configured to determine that the target container has been loaded, and trigger an eighth control unit.

The eighth control unit 28 is configured to control the autonomous vehicle to move from the inspection area to the port area.

In Embodiment 4 of the present disclosure, the autonomous driving control device 2 may be provided on a DSP, an FPGA controller, an industrial computer, a vehicle computer, an ECU, or a VCU mounted on the vehicle. The third obtaining unit 21, the fifth control unit 22, the third determining unit 23, the sixth control unit 24, the fourth obtaining unit 25, the seventh control unit 26, the fourth determining unit 27, and the eighth control unit 28 can be implemented with a processor (such as CPU) of the DSP, FPGA, industrial computer, vehicle computer, EUC or VCU.

In an embodiment of the present disclosure, the fifth control unit 22 can control the autonomous vehicle to move to the waiting area at the entrance to the customs. For further details, reference can be made to the first control unit 12 in Embodiment 3, and description thereof will be omitted here.

In an embodiment of the present disclosure, the sixth control unit 24 can control the autonomous vehicle to move to the inspection lane. For further details, reference can be made to the second control unit 14 in Embodiment 3, and description thereof will be omitted here.

In an embodiment of the present disclosure, the seventh control unit 26 can control the autonomous vehicle to move to the target location in the inspection area as specified in the pick-up notification by: determining a driving route from the inspection lane to the target location, and controlling the autonomous vehicle to move to the target location along the driving route. The seventh control unit 26 can determine the driving route from the inspection lane to the target location by: planning the driving route from the inspection lane to the target location based on pre-stored electronic map data; or obtaining the driving route from the inspection lane to the target location from the pick-up notification.

Preferably, the third obtaining unit 21 can be configured to perform any of the following:
Scheme N1: Receive the transportation task from an inspection system in the port area through a communication interface of autonomous driving device; or
Scheme N2: Receive the transportation task from the customs system through a communication interface of autonomous driving device.

For details of the above Schemes N1 ∼ N2, reference can be made to Schemes G1 ∼ G2 in Embodiment 2, and description thereof will be omitted here.

Preferably, the fourth obtaining unit 25 can be configured to perform any of the following:
Scheme O1: Receive the pick-up notification from an inspection system in the port area through a communication interface of autonomous driving device;
Scheme O2: Receive the pick-up notification from a customs system through a communication interface of autonomous driving device;
Scheme O3: Capture an image of an electronic screen located in the inspection lane using a vehicle-mounted camera, and identify content in the image using a predetermined image identification algorithm to obtain the pick-up notification; or
Scheme O4: Identify the pick-up notification broadcasted by a voice broadcaster using a predetermined voice model.

For details of the above Schemes O1 ∼ O4, reference can be made to Schemes HI ∼ H4 in Embodiment 2, and description thereof will be omitted here.

Preferably, the fourth determining unit 27 can be configured to perform any of the following:
Scheme P1: Determine that the container has been loaded when determining that a gravity value fed back from a gravity sensor is larger than a predetermined gravity threshold value and remains unchanged for a predetermined time length, the gravity sensor being installed on a platform of the autonomous vehicle;
Scheme P2: Determine that the container has been loaded when receiving a container loaded indication from an inspection system in a port area;
Scheme P3: Determine that the container has been loaded when receiving a container loaded indication from a customs system;
Scheme P4: Determine that the container has been loaded when receiving a container loaded indication from a loading/unloading control device in the inspection area;
Scheme P5: Capture an image of an electronic screen in the inspection area using a vehicle-mounted camera, and identify content in the image using a predetermined image identification algorithm to obtain a notification that the container has been loaded; or
Scheme P6: Identify a notification that the container has been loaded as broadcasted by a voice broadcaster using a predetermined voice model.

For details of the above Schemes P1 ∼ P6, reference can be made to Schemes I1 ∼ 16 in Embodiment 2, and description thereof will be omitted here.

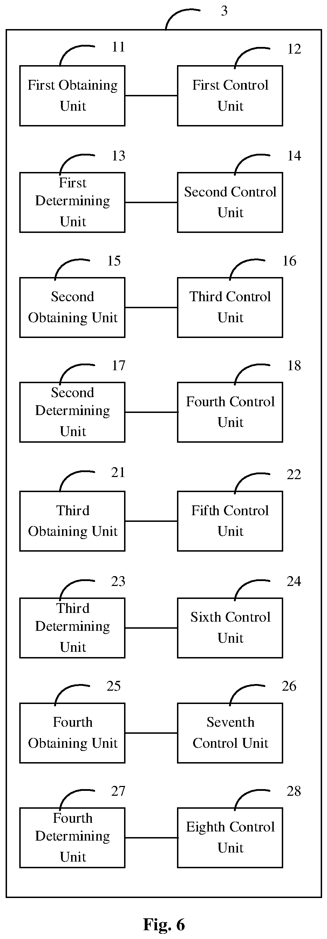

In an embodiment of the present disclosure, the autonomous driving control device 1 described in Embodiment 3 can be provided on some autonomous vehicles, such that the autonomous vehicles can transport containers in the port area to the customs for customs inspection. The autonomous driving control device 2 described in Embodiment 4 can be provided on other autonomous vehicles, such that the autonomous vehicles can transport containers from the customs back to the port area. Of course, autonomous driving control devices (referring to autonomous driving control devices 3 for example) can be provided on some autonomous vehicles to implement the functions of the autonomous driving control device 1 and the functions of the autonomous driving control device 2, such that the autonomous vehicles can transport containers in the port area to the customs for customs inspection and/or transport containers from the customs back to the port area. The autonomous driving control device 3 may have a structure shown in Fig. 6, and for details of the respective units/modules therein, reference can be made to the corresponding units/modules in Embodiment 3 and Embodiment 4, and description thereof will be omitted here.

### Embodiment 5

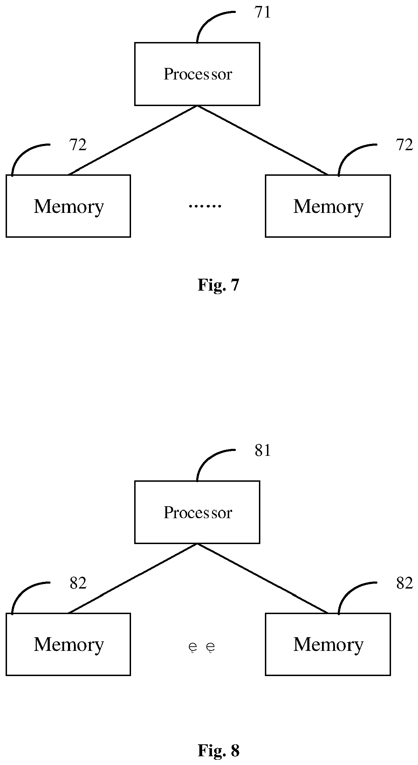

Based on the same concept as the autonomous driving control method according to Embodiment 1, Embodiment 5 of the present disclosure provides an autonomous driving control device. The autonomous driving control device 1 can have a structure shown in Fig. 7 and includes a processor 71 and at least one memory 72 storing at least one machine executable instruction. The processor 71 is operative to execute the at least one machine executable instruction to perform the process shown in Fig. 1 according to Embodiment 1, and description thereof will be omitted here.

### Embodiment 6

Based on the same concept as the autonomous driving control method according to Embodiment 2, Embodiment 6 of the present disclosure provides an autonomous driving control device. The autonomous driving control device 1 can have a structure shown in Fig. 8 and includes a processor 81 and at least one memory 82 storing at least one machine executable instruction. The processor 81 is operative to execute the at least one machine executable instruction to perform the process shown in Fig. 3 according to Embodiment 2, and description thereof will be omitted here.

The basic principles of the present disclosure have been described above with reference to the embodiments. However, it can be appreciated by those skilled in the art that all or any of the steps or components of the method or device according to the present disclosure can be implemented in hardware, firmware, software or any combination thereof in any computing device (including a processor, a storage medium, etc.) or a network of computing devices. This can be achieved by those skilled in the art using their basic programing skills based on the description of the present disclosure.

It can be appreciated by those skilled in the art that all or part of the steps in the method according to the above embodiment can be implemented in hardware following instructions of a program. The program can be stored in a computer readable storage medium. The program, when executed, may include one or any combination of the steps in the method according to the above embodiment.

Further, the functional units in the embodiments of the present disclosure can be integrated into one processing module or can be physically separate, or two or more units can be integrated into one module. Such integrated module can be implemented in hardware or software functional units. When implemented in software functional units and sold or used as a standalone product, the integrated module can be stored in a computer readable storage medium.

It can be appreciated by those skilled in the art that the embodiments of the present disclosure can be implemented as a method, a system or a computer program product. The present disclosure may include pure hardware embodiments, pure software embodiments and any combination thereof. Also, the present disclosure may include a computer program product implemented on one or more computer readable storage mediums (including, but not limited to, magnetic disk storage and optical storage) containing computer readable program codes.

The present disclosure has been described with reference to the flowcharts and/or block diagrams of the method, device (system) and computer program product according to the embodiments of the present disclosure. It can be appreciated that each process and/or block in the flowcharts and/or block diagrams, or any combination thereof, can be implemented by computer program instructions. Such computer program instructions can be provided to a general computer, a dedicated computer, an embedded processor or a processor of any other programmable data processing device to constitute a machine, such that the instructions executed by a processor of a computer or any other programmable data processing device can constitute means for implementing the functions specified by one or more processes in the flowcharts and/or one or more blocks in the block diagrams.

These computer program instructions can also be stored in a computer readable memory that can direct a computer or any other programmable data processing device to operate in a particular way. Thus, the instructions stored in the computer readable memory constitute a manufacture including instruction means for implementing the functions specified by one or more processes in the flowcharts and/or one or more blocks in the block diagrams.

These computer program instructions can also be loaded onto a computer or any other programmable data processing device, such that the computer or the programmable data processing device can perform a series of operations/steps to achieve a computer-implemented process. In this way, the instructions executed on the computer or the programmable data processing device can provide steps for implementing the functions specified by one or more processes in the flowcharts and/or one or more blocks in the block diagrams.

While the embodiments of the present disclosure have described above, further alternatives and modifications can be made to these embodiments by those skilled in the art in light of the basic inventive concept of the present disclosure. The claims as attached are intended to cover the above embodiments and all these alternatives and modifications that fall within the scope of the present disclosure.

Obviously, various modifications and variants can be made to the present disclosure by those skilled in the art without departing from the spirit and scope of the present disclosure. Therefore, these modifications and variants are to be encompassed by the present disclosure if they fall within the scope of the present disclosure as defined by the claims and their equivalents.

## Claims

1. An autonomous vehicle control method, comprising:
obtaining a customs inspection task for transporting a target container to customs for inspection;
controlling an autonomous vehicle to transport the target container to a waiting area at an entrance to the customs;
determining an inspection lane corresponding to the autonomous vehicle, and controlling the autonomous vehicle to move to the inspection lane;
obtaining an inspection notification indicating that the customs have decided to inspect the target container, and controlling the autonomous vehicle to move to a target location in an inspection area specified in the inspection notification to wait for the container to be unloaded; and
controlling the autonomous vehicle to leave the inspection area when determining that the container has been unloaded.

2. The method of claim 1, wherein said obtaining the customs inspection task for transporting the target container to the customs for inspection comprises:
receiving the customs inspection task from an inspection system of a port area;
receiving the customs inspection task from a customs system;
capturing a first image of an electronic screen using a vehicle-mounted camera, and identifying content in the first image using a predetermined image identification algorithm to obtain the customs inspection task; and
identifying the customs inspection task broadcasted by a voice broadcaster using a predetermined voice model.

3. The method of claim 1, wherein said controlling the autonomous vehicle to transport the target container to the waiting area at the entrance to the customs comprises:
determining a first driving route from a current location of the autonomous vehicle to the waiting area at the entrance to the customs, and controlling the autonomous vehicle to move to the waiting area at the entrance to the customs along the first driving route.

4. The method of claim 3, further comprising, while controlling the autonomous vehicle to move to the waiting area at the entrance to the customs along the first driving route:
determining, when determining from perception information fed back from a vehicle-mounted sensor that there is a toll station ahead along a current road, whether the autonomous vehicle is an Electronic Toll Collection (ETC) system enabled vehicle; and
if so, controlling the autonomous vehicle to pass through the toll station via an ETC lane, and controlling the autonomous vehicle to continue to move along the first driving route; or
otherwise controlling the autonomous vehicle to stop at the toll station and automatically pay a toll, and controlling the autonomous vehicle to continue to move along the first driving route when determining from perception information fed back from the vehicle-mounted sensor that the autonomous vehicle has been cleared by the toll station.

5. The method of claim 1, wherein said determining the inspection lane corresponding to the autonomous vehicle comprises:
receiving the inspection lane corresponding to the autonomous vehicle from an inspection system in a port area;
receiving the inspection lane corresponding to the autonomous vehicle from a customs system;
capturing a second image of an electronic screen located in the waiting area using a vehicle-mounted camera, and identifying content in the second image using a predetermined image identification algorithm to obtain the inspection lane corresponding to the autonomous vehicle; or
identifying the inspection lane corresponding to the autonomous vehicle as broadcasted by a voice broadcaster using a predetermined voice model.

6. The method of claim 1, wherein said obtaining the inspection notification indicating that the customs have decided to inspect the target container comprises:
receiving the inspection notification from an inspection system in a port area;
receiving the inspection notification from a customs system;
capturing a third image of an electronic screen located in the inspection lane using a vehicle-mounted camera, and identifying content in the third image using a predetermined image identification algorithm to obtain the inspection notification; or
identifying the inspection notification broadcasted by a voice broadcaster using a predetermined voice model.

7. The method of claim 1, wherein said controlling the autonomous vehicle to move to the target location in the inspection area specified in the inspection notification comprises:
determining a third driving route from the inspection lane to the target location, and controlling the autonomous vehicle to move to the target location along the third driving route.

8. The method of claim 7, further comprising, prior to controlling the autonomous vehicle to move to the target location along the third driving route:
determining from perception information fed back from a vehicle-mounted sensor whether the autonomous vehicle has been cleared by the inspection lane; and
if so, executing the step of controlling the autonomous vehicle to move to the target location along the third driving route, or otherwise controlling the autonomous vehicle to wait where it is.

9. The method of claim 1, wherein said determining that the container has been unloaded comprises:
determining that the container has been unloaded when determining that a gravity value fed back from a gravity sensor is smaller than or equal to a predetermined gravity threshold value and remains unchanged for a predetermined time length, the gravity sensor being installed on a platform of the autonomous vehicle;
determining that the container has been unloaded when receiving a container unloaded indication from an inspection system in a port area;
determining that the container has been unloaded when receiving a container unloaded indication from a customs system;
determining that the container has been unloaded when receiving a container unloaded indication from a loading/unloading control device in the inspection area;
capturing a fourth image of an electronic screen in the inspection area using a vehicle-mounted camera, and identifying content in the fourth image using a predetermined image identification algorithm to obtain a notification that the container has been unloaded; or
identifying a notification that the container has been unloaded as broadcasted by a voice broadcaster using a predetermined voice model.

10. An autonomous vehicle control method, comprising:
obtaining a transportation task for transporting a target container from customs to a port area;
controlling an autonomous vehicle to move to a waiting area at an entrance to the customs;
determining an inspection lane corresponding to the autonomous vehicle, and controlling the autonomous vehicle to move to the inspection lane;
obtaining a pick-up notification, and controlling the autonomous vehicle to move to a target location in the inspection area as specified in the pick-up notification to wait for the target container to be loaded; and
controlling the autonomous vehicle to move from the inspection area to the port area when determining that the target container has been loaded.

11. The method of claim 10, wherein said obtaining the transportation task for transporting the target container from the customs to the port area comprises:
receiving the transportation task from an inspection system in the port area; or
receiving the transportation task from a customs system.

12. The method of claim 10, wherein said obtaining the pick-up notification comprises:
receiving the pick-up notification from an inspection system in the port area;
receiving the pick-up notification from a customs system;
capturing an image of an electronic screen located in the inspection lane using a vehicle-mounted camera, and identifying content in the image using a predetermined image identification algorithm to obtain the pick-up notification; or
identifying the pick-up notification broadcasted by a voice broadcaster using a predetermined voice model.

13. The method of claim 10, wherein said determining that the target container has been loaded comprises:
determining that the container has been loaded when determining that a gravity value fed back from a gravity sensor is larger than a predetermined gravity threshold value and remains unchanged for a predetermined time length, the gravity sensor being installed on a platform of the autonomous vehicle;
determining that the container has been loaded when receiving a container loaded indication from an inspection system in a port area;
determining that the container has been loaded when receiving a container loaded indication from a customs system;
determining that the container has been loaded when receiving a container loaded indication from a loading/unloading control device in the inspection area;
capturing an image of an electronic screen in the inspection area using a vehicle-mounted camera, and identifying content in the image using a predetermined image identification algorithm to obtain a notification that the container has been loaded; or
identifying a notification that the container has been loaded as broadcasted by a voice broadcaster using a predetermined voice model.

14. An autonomous driving control device, comprising:
a first obtaining unit configured to obtain a customs inspection task for transporting a target container to customs for inspection;
a first control unit configured to control an autonomous vehicle to transport the target container to a waiting area at an entrance to the customs;
a first determining unit configured to determine an inspection lane corresponding to the autonomous vehicle, and trigger a second control unit;
the second control unit configured to control the autonomous vehicle to move to the inspection lane;
a second obtaining unit configured to obtain an inspection notification indicating that the customs have decided to inspect the target container, and trigger a third control unit;
the third control unit configured to control the autonomous vehicle to move to a target location in an inspection area specified in the inspection notification to wait for the container to be unloaded;
a second determining unit configured to trigger a fourth control unit when determining that the container has been unloaded; and
the fourth control unit configured to control the autonomous vehicle to leave the inspection area.

15. The device of claim 14, wherein the first obtaining unit is configured to:
receive the customs inspection task from an inspection system of a port area through a communication interface of autonomous driving device;
receive the customs inspection task from a customs system through the communication interface of autonomous driving device;
capture a first image of an electronic screen using a vehicle-mounted camera, and identify content in the first image using a predetermined image identification algorithm to obtain the customs inspection task; and
identify the customs inspection task broadcasted by a voice broadcaster using a predetermined voice model.

16. The device of claim 14, wherein the first control unit is configured to:
determine a first driving route from a current location of the autonomous vehicle to the waiting area at the entrance to the customs, and control the autonomous vehicle to move to the waiting area at the entrance to the customs along the first driving route.

17. The device of claim 14, wherein the first determining unit is configured to:
receive the inspection lane corresponding to the autonomous vehicle from an inspection system in a port area through the communication interface of autonomous driving device;
receive the inspection lane corresponding to the autonomous vehicle from a customs system through the communication interface of autonomous driving device;
capture a second image of an electronic screen located in the waiting area using a vehicle-mounted camera, and identify content in the second image using a predetermined image identification algorithm to obtain the inspection lane corresponding to the autonomous vehicle; or
identify the inspection lane corresponding to the autonomous vehicle as broadcasted by a voice broadcaster using a predetermined voice model.

18. The device of claim 14, wherein the second obtaining unit is configured to:
receive the inspection notification from an inspection system in a port area through the communication interface of autonomous driving device;
receive the inspection notification from a customs system through the communication interface of autonomous driving device;
capture a third image of an electronic screen located in the inspection lane using a vehicle-mounted camera, and identify content in the third image using a predetermined image identification algorithm to obtain the inspection notification; or
identify the inspection notification broadcasted by a voice broadcaster using a predetermined voice model.

19. The device of claim 14, wherein the third control unit is configured to:
determine a third driving route from the inspection lane to the target location, and control the autonomous vehicle to move to the target location along the third driving route.

20. The device of claim 14, wherein the second determining unit is configured to:
determine that the container has been unloaded when determining that a gravity value fed back from a gravity sensor is smaller than or equal to a predetermined gravity threshold value and remains unchanged for a predetermined time length, the gravity sensor being installed on a platform of the autonomous vehicle;
determine that the container has been unloaded when receiving a container unloaded indication from an inspection system in a port area;
determine that the container has been unloaded when receiving a container unloaded indication from a customs system;
determine that the container has been unloaded when receiving a container unloaded indication from a loading/unloading control device in the inspection area;
capture a fourth image of an electronic screen in the inspection area using a vehicle-mounted camera, and identify content in the fourth image using a predetermined image identification algorithm to obtain a notification that the container has been unloaded; or
identify a notification that the container has been unloaded as broadcasted by a voice broadcaster using a predetermined voice model.

21. An autonomous driving control device, comprising:
a third obtaining unit configured to obtain a transportation task for transporting a target container from customs to a port area, and trigger a fifth control unit;
the fifth control unit configured to control an autonomous vehicle to move to a waiting area at an entrance to the customs;
a third determining unit configured to determine an inspection lane corresponding to the autonomous vehicle, and trigger a sixth control unit;
the sixth control unit configured to control the autonomous vehicle to move to the inspection lane;
a fourth obtaining unit configured to obtain a pick-up notification, and trigger a seventh control unit;
the seventh control unit configured to control the autonomous vehicle to move to a target location in the inspection area as specified in the pick-up notification to wait for the target container to be loaded;
a fourth determining unit configured to determine that the target container has been loaded, and trigger an eighth control unit; and
the eighth control unit configured to control the autonomous vehicle to move from the inspection area to the port area.

22. The device of claim 21, wherein the third obtaining unit is configured to:
receive the transportation task from an inspection system in the port area through the communication interface of autonomous driving device; or
receive the transportation task from the customs system through the communication interface of autonomous driving device.

23. The device of claim 21, wherein the fourth obtaining unit is configured to:
receive the pick-up notification from an inspection system in the port area through the communication interface of autonomous driving device;
receive the pick-up notification from a customs system through the communication interface of autonomous driving device;
capture an image of an electronic screen located in the inspection lane using a vehicle-mounted camera, and identify content in the image using a predetermined image identification algorithm to obtain the pick-up notification; or
identify the pick-up notification broadcasted by a voice broadcaster using a predetermined voice model.

24. The device of claim 21, wherein the fourth determining unit is configured to:
determine that the container has been loaded when determining that a gravity value fed back from a gravity sensor is larger than a predetermined gravity threshold value and remains unchanged for a predetermined time length, the gravity sensor being installed on a platform of the autonomous vehicle;
determine that the container has been loaded when receiving a container loaded indication from an inspection system in a port area;
determine that the container has been loaded when receiving a container loaded indication from a customs system;
determine that the container has been loaded when receiving a container loaded indication from a loading/unloading control device in the inspection area;
capture an image of an electronic screen in the inspection area using a vehicle-mounted camera, and identify content in the image using a predetermined image identification algorithm to obtain a notification that the container has been loaded; or
identify a notification that the container has been loaded as broadcasted by a voice broadcaster using a predetermined voice model.

25. An autonomous driving control device, comprising: a processor and at least one memory storing at least one machine executable instruction, the processor being operative to execute the at least one machine executable instruction to:
obtain a customs inspection task for transporting a target container to customs for inspection;
control an autonomous vehicle to transport the target container to a waiting area at an entrance to the customs;
determine an inspection lane corresponding to the autonomous vehicle, and control the autonomous vehicle to move to the inspection lane;
obtain an inspection notification indicating that the customs have decided to inspect the target container, and control the autonomous vehicle to move to a target location in an inspection area specified in the inspection notification to wait for the container to be unloaded; and
control the autonomous vehicle to leave the inspection area when determining that the container has been unloaded.

26. An autonomous driving control device, comprising: a processor and at least one memory storing at least one machine executable instruction, the processor being operative to execute the at least one machine executable instruction to:
obtain a transportation task for transporting a target container from customs to a port area;
control an autonomous vehicle to move to a waiting area at an entrance to the customs;
determine an inspection lane corresponding to the autonomous vehicle, and control the autonomous vehicle to move to the inspection lane;
obtain a pick-up notification, and control the autonomous vehicle to move to a target location in the inspection area as specified in the pick-up notification to wait for the target container to be loaded; and
control the autonomous vehicle to move from the inspection area to the port area when determining that the target container has been loaded.
